# EUROPÄISCHE PATENTSCHRIFT

(11) **EP 0 627 582 B1**
(45) Veröffentlichungstag und Bekanntmachung des Hinweises auf die Patenterteilung: **19.11.1997**
(21) Anmeldenummer: 94103643.6
(22) Anmeldetag: 10.03.1994
(51) Int. Cl.: F16J 15/16, F16K 11/07

(54) **Dichtungsanordnung**
Seal arrangement
Dispositif de joint

(30) Priorität: 05.05.1993 AT 875/93
(43) Veröffentlichungstag der Anmeldung: 07.12.1994
(73) Patentinhaber: HOERBIGER VENTILWERKE AKTIENGESELLSCHAFT, 1110 Wien (AT)
(72) Erfinder: Frisch, Herbert, A-1238 Wien (AT)
(74) Vertreter: Pinter, Rudolf, Dipl.-Ing.

(56) Entgegenhaltungen:
- EP-A- 0 139 150
- EP-A- 0 284 772
- EP-A- 0 475 070
- GB-A- 2 263 141

## Beschreibung

Die Erfindung betrifft eine Dichtungsanordnung für den Steuerkolben eines Pneumatikventils, mit einem Dichtring aus zumindest teilweise elastischem Material, der einen äußeren, im wesentlichen scheibenförmigen Dichtbereich mit einer im eingebauten Zustand am abzudichtenden Oberflächenbereich anliegenden Dichtkante, und einen konzentrisch innerhalb des Dichtbereiches gelegenen Haltebereich aufweist, und der unter teilweiser Vorspannung in einer zugehörigen nutförmigen Ausnehmung des Steuerkolbens angeordnet ist.

Für verschiedenste Anwendungsfälle sind beispielsweise Pneumatikventile bekannt, deren Steuerkolben mit elastischen Dichtungen abgedichtet sind. Diese Dichtungen können entweder auf dem Steuerkolben selbst oder am Gehäuse montiert sein und sich damit entweder bei der Bewegung des Steuerkolbens mitbewegen oder aber in der Einbaulage im Gehäuse feststehend bleiben. Speziell bei den Dichtungsanordnungen der eingangs genannten Art, bei denen der Dichtring auf dem Steuerkolben montiert ist, sind Dichtringe bekannt, die wie 0-Ringe in entsprechenden Nuten des Steuerkolbens liegen. Es sind dabei unterschiedlichste Formen für den Dichtringquerschnitt bekannt, wobei jedoch vorzugsweise im wesentlichen scheibenförmige Dichtringe zum Einsatz kommen.

Diese Dichtungsanordnungen haben insbesonders den Nachteil, daß ein vorbeistreichender Luftstrom, wie er in schaltenden Ventilen immer vorhanden ist, den Dichtring herausziehen kann, was häufig durch einen außen über den Dichtring gezogenen Gleitring bzw. eine spezielle Schaltkantenkonstruktion zu verhindern getrachtet wird, womit jedoch eine aufwendigere und damit teurere Konstruktion einhergeht.

In Abwandlung der oben angesprochenen Scheibendichtungen sind auch Dichtungsanordnungen bekannt geworden, bei denen der Dichtring nicht einfach in Nuten des Steuerkolbens eingelegt wird, sondern bei denen der Kolben aus Einzelteilen mit dazwischenliegenden Dichtringen und einem Verbindungsstück erst zugleich mit der Montage der Dichtungsanordnung bzw. des Dichtringes zusammengestellt wird, wobei radial gerichtete Falze an den axialen Flächen der Dichtringe in entsprechende Nuten der Zwischenteile gesteckt werden. Dieses Halten an den Falzen in der Nähe des Dichtdurchmessers verhindert zwar das oben beschriebene Herausziehen des Dichtringes aus der Nut, womit aber gleichzeitig der Aufbau des Kolbens sowie die Montage durch die notwendige Teilung komplizierter wird. Eine funktionell ähnliche Ausbildung mit separaten, mehrteilig aufgebauten Dichtungsträgern ist weiters z.B. aus der EP-0 475 070 A1 bekannt.

Aufgabe der vorliegenden Erfindung ist es, eine Dichtungsanordnung der eingangs genannten Art so zu verbessern, daß die angeführten Nachteile bekannter derartiger oder ähnlicher Konstruktionen vermieden werden und daß insbesonders unter zuverlässiger Verhinderungen eines Herausziehens des Dichtringes der Gesamtaufbau der Dichtungsanordnung, bzw. eines damit ausgerüsteten Steuerkolbens, vereinfacht wird.

Diese Aufgabe wird gemäß der vorliegenden Erfindung bei einer Dichtungsanordnung der genannten Art dadurch gelöst, daß die nutförmige Ausnehmung des zumindest im Bereich dieser Ausnehmung einstückigen Steuerkolbens zumindest einseitig eine von einem näher zur Dichtkante gelegenen Bereich geringerer Breite zu einem weiter entfernt von der Dichtkante gelegenen Bereich größerer Breite rückspringende Halteschulter aufweist und daß der Haltebereich des Dichtringes eine zugeordnete, zumindest teilweise über den Umfang umlaufende Haltekante aufweist, welche im unter elastischer Aufweitung des Dichtringes erfolgten eingebauten Zustand des Dichtringes diesen an der rückspringenden Halteschulter in der nutförmigen Ausnehmung sichert. Nach dem Einbringen des Dichtringes in die nutförmige Ausnehmung, wobei die Haltekante im Haltebereich des Dichtringes - im Hinblick auf die Lage der Dichtkantehinter die rückspringende Halteschulter zu liegen kommt, besteht somit eine quasi formschlüssige Verbindung zwischen Halteschulter und Haltekante sodaß der Dichtring - wenn überhaupt - nur mehr unter Überwindung bzw. außer Eingriff bringen dieser formschlüssigen Verbindung aus der nutförmigen Ausnehmung entfernt werden kann. Über die Ausbildung, Formgebung und Dimensionierung der rückspringenden Halteschulter in der nutförmigen Ausnehmung einerseits und der Haltekante im Haltebereich des Dichtringes andererseits kann dieses Festhalten des Dichtringes in der nutförmigen Ausnehmung bezüglich der zu seiner Überwindung erforderlichen Kraft leicht beeinflußt bzw. variiert werden, sodaß die ganze Bandbreite zwischen einem nur leichten, ein gewolltes Auswechseln des Dichtringes ermöglichenden Festhalten bis zu einem dauerhaften und nur unter Zerstörung des Dichtringes aufhebbaren Festhalten mit einfachsten Variationen abgedeckt werden kann.

In bevorzugter Ausgestaltung der Erfindung ist vorgesehen, daß die rückspringende Halteschulter von der der Dichtkante nähergelegenen Seitenfläche eines seitlichen Einstiches in der umlaufenden nutförmigen Ausnehmung gebildet ist. Dies erleichtert die Herstellung des den nutförmigen Haltebereich tragenden Steuerkolbens, da beispielsweise beim Ausstechen der nutförmigen Ausnehmung auch recht leicht und einfach gleich der seitliche Einstich mitgefertigt werden kann, soferne nur dessen Tiefe bezogen auf die seitliche Wand der nutförmigen Ausnehmung nicht zu groß wird. Im Einblick auf einen beispielsweise zerspanend noch einfach herstellbaren seitlichen Einstich sollte dessen seitliche Tiefe nicht mehr als etwa 10 % - 20 % der Breite der nutförmigen Ausnehmung betragen. Es ist dabei weitgehend belanglos, ob ein derartiger seitlicher Einstich in der nutörmigen Ausnehmung in der Nähe des Nutgrundes oder an sonstiger Stelle der Nuthöhe vorgesehen wird.

Nach einer anderen Ausbildung der Erfindung ist vorgesehen, daß die rückspringende Halteschulter von der der Dichtkante abgewandten Seite einer umlaufenden Verengung der nutfömigen Ausnehmung gebildet ist, wobei durch Ausbildung und Dimensionierung dieser Verengung wiederum in oben beschriebener einfacher Weise die Größe der Haltekraft beeinflußt werden kann.

Die Haltekante des Dichtringes kann in besonders bevorzugter Ausgestaltung der Erfindung an einer umlaufenden lippenfömigen Verbreiterung des Dichtringes im Haltebereich ausgebildet sein, wobei diese lippenförmige Verbreiterung insbesonders widerhakenfömig mit der Spitze in Richtung weg vom Grund der nutfömigen Ausnehmung orientiert sein kann, was einerseits ein leichtes Einbringen des Dichtringes in die nutfömige Ausnehmung und andererseits ein sicheres formschlüssiges Halten des eingebrachten Dichtringes ermöglicht. Soferne die äußeren Enden der im Querschnitt widerhakenförmig in Richtung zur Dichtkante stehenden lippenfömigen Verbreiterung des Dichtringes als Dichtlippen an den zugehörigen Bereichen der nutfömigen Ausnehmung anliegen, wird eine pneumatische Unterstützung des mechanischen Halteeffektes erreicht, wobei die Dichtung nicht vom abzudichtenden Druck unterwandert und herausgedrückt werden kann.

In weiterer vorteilhafter Ausgestaltung der Erfindung ist vorgesehen, daß der Dichtring zwischen Dichtbereich und Haltebereich eine das Eindrücken des Haltebereiches samt Haltekante hinter die Halteschulter erleichternde, seitlich umlaufende Ausbuchtung aufweist. Das an der Stelle dieser umlaufenden Einbuchtung damit fehlende Material ermöglicht ein leichtes Ausweichen des bei der Einbringung des Dichtringes in die nutförmige Ausnehmung im Bereich der Haltekante zusammenzudrückenden Materials, was die Handhabung bzw. Montage erleichtert.

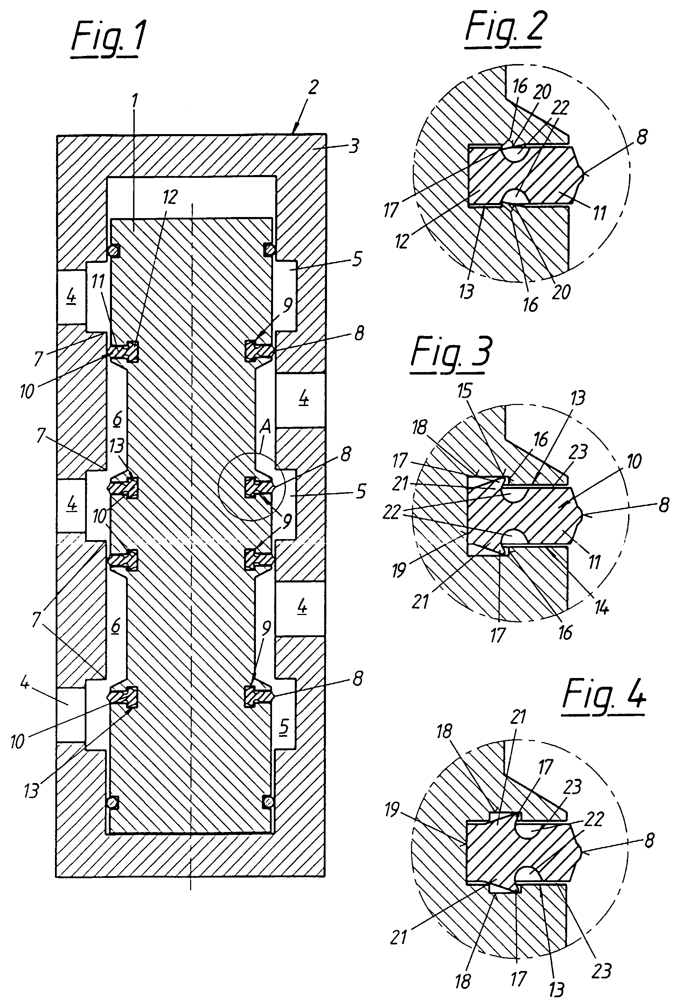

Die Erfindung wird im folgenden noch anhand der in Zeichnung schematisch dargestellten Ausführungbeispiele wie hier erläutert. Fig. 1 zeigt dabei einen teilweisen Längsschnitt durch ein Pneumatikventil im Bereich des Steuerkolbens und die Fig. 2 - 4 zeigen jeweils unterschiedliche Ausbildungen des mit A bezeichneten Bereiches in Fig. 1 in vergrößertem Maßstab.

Der in Fig. 1 schematisch dargestellt Steuerkolben 1 ist Teil eines Pneumatikventils 2, dessen Gehäuse 3 verschiedene Anschlüsse 4 aufweist, die über Steuerräume 5 bzw. diese von Zwischenbereichen 6 trennende Steuerkanten 7 und damit zusammenwirkende Dichtkanten 8 auf hier nicht weiter interessierende Weise gesteuert werden.

Die den Dichtkanten 8 zugeordneten Dichtungsanordnungen 9 weisen einen Dichtring 10 aus zumindest teilweise elastischem Material auf, der einen äußeren im wesentlichen scheibenförmigen Dichtbereich 11, mit der im eingebauten Zustand am abzudichtenden Gehäuse 3 anliegenden Dichtkante 8, und einen konzentrisch innerhalb des Dichtbereiches 11 gelegenen Haltebereich 12 hat. Der gesamte Dichtring 10 ist auf untenstehend noch beschriebene Weise mittels des Haltebereiches bzw. dessen Ausbildung unter teilweiser Vorspannung in einer zugehörigen nutförmigen Ausnehmung 13 des Steuerkolbens 1 gehalten, sodaß er nicht durch einen vorbeistreichenden Luftstrom an der Dichtkante 8 - wie er in schaltenden Ventilen immer vorhanden ist - aus der nutförmigen Ausnehmung 13 gezogen werden kann.

Die nutfömige Ausnehmung 13 weist hier beidseitig jeweils eine von einem näher zur Dichtkante 8 gelegenen Bereich 14 geringerer Breite zu einem weiter entfernt von der Dichtkante 8 gelegenen Bereich 15 größerer Breite rückspringende Halteschulter 16 auf, wie dies insbesonders in der Vergrößerung des Details A in Fig. 3 zu ersehen ist. Der Haltebereich 12 des Dichtringes 10 weist hier ebenso beidseitig je eine zugeordnete, über den Umfang umlaufende Haltekante 17 auf, welche im eingebauten Zustand des Dichtringes 10 diesen auf ersichtliche Weise an der rückspringenden Halteschulter 16 in der nutförmigen Ausnehmung 13 gegen Herausziehen sichert.

Gemäß den Fig. 3 und 4 ist die rückspringende Halteschulter 16 jeweils von der der Dichtkante 8 nähergelegenen Seitenfläche eines seitlichen Einstiches 18 in der umlaufenden nutförmigen Ausbildung 13 gebildet, wobei gemäß Fig. 3 die seitlichen Einstiche 18 unmittelbar am Nutgrund 19 ausgebildet sind, wogegen sie gemäß Fig. 4 mit Abstand vom Nutgrund 19 etwas weiter außen liegen.

Bei der Ausführung nach Fig. 2 sind hingegen die rückspringenden Halteschultern 16 jeweils von der der Dichtkante 8 abgewandten Seite einer umlaufenden Verengung 20 der nutfömigen Ausnehmung 13 gebildet.

Bei den Ausführungen nach Fig. 3 und 4 ist die Haltekante 17 des Dichtringes 10 jeweils an einer umlaufenden lippenförmigen Verbreiterung 21 des Dichtringes 10 im Haltebereich 12 ausgebildet wogegen bei der Ausführung nach Fig. 2 der Dichtring 10 im Haltebereich 12 prinzipiell die gleiche Dicke wie im Dichtbereich 11 hat, wobei die Haltekanten 17 hier am in der Darstellung linken Ende einer Einbuchtung 22 des Dichtringes 10 zwischen Dichtbereich 11 und Haltebereich 12 ausgebildet sind.

Eine derartige Einbuchtung 22 ist auch bei den Ausführungen nach Fig. 3 und 4 vorgesehen wodurch das Eindrücken des Haltebereiches 12 samt Haltekante 17 hinter die Halteschulter 16 erleichtert wird, da das dabei jeweils zusammendrückende Material des Haltebereiches 12 bis zu einem gewissen Grade dorthin ausweichen kann.

Aus den Darstellungen in Fig. 3 und 4 ist auch ersichtlich, daß die Haltekanten 17 hier zusätzlich als Dichtkanten wirken und durch den über die übertrieben groß dargestellten Spalte 23 gegebenenfalls wirkenden Druck unterstützt noch fester an die zugehörigen Flächen des jeweiligen Einstichs 18 gedrückt werden, sodaß der abzudichtende Druck den Dichtring 10 nicht unterwandern und dadurch aus der nutförmigen Ausnehmung 13 drücken kann.

Es ist leicht einsichtig, daß durch einfache Variation der Formgebung, Anordnung und Dimensionierung der die Halteschulter 16 einerseits und die Haltekante 17 andererseits definierenden Elemente die Stärke des Festhaltens des Dichtringes 10 in der nutförmigen Ausnehmung 13 unmittelbar und leicht beeinflußt werden kann.

## Patentansprüche

1. Dichtungsanordnung für den Steuerkolben (1) eines Pneumatikventils (2), mit einem Dichtring (10) aus zumindest teilweise elastischem Material, der einen äußeren, im wesentlichen scheibenförmigen Dichtbereich (11) mit einer im eingebauten Zustand am abzudichtenden Oberflächenbereich (3) anliegenden Dichtkante (8), und einen konzentrisch innerhalb des Dichtbereiches (11) gelegenen Haltebereich (12) aufweist, und der unter teilweiser Vorspannung in einer zugehörigen nutförmigen Ausnehmung (13) des Steuerkolbens (1) angeordnet ist, **dadurch gekennzeichnet**, daß die nutförmige Ausnehmung (13) des zumindest im Bereich dieser Ausnehmung (13) einstückigen Steuerkolbens (1) zumindest einseitig eine von einem näher zur Dichtkante (8) gelegenen Bereich (14) geringerer Breite zu einem weiter entfernt von der Dichtkante (8) gelegenen Bereich (15) größerer Breite rückspringende Halteschulter (16) aufweist und daß der Haltebereich (12) des Dichtringes (10) eine zugeordnete, zumindest teilweise über den Umfang umlaufende Haltekante (17) aufweist, welche im unter elastischer Aufweitung des Dichtringes (10) erfolgten eingebauten Zustand des Dichtringes diesen an der rückspringenden Halteschulter (16) in der nutförmigen Ausnehmung (13) sichert.

2. Dichtungsanordnung nach Anspruch 1, dadurch gekennzeichnet, daß die rückspringende Halteschulter (16) von der der Dichtkante (8) nähergelegenen Seitenfläche eines seitlichen Einstiches (18) in der umlaufenden nutförmigen Ausnehmung (13) gebildet ist.

3. Dichtunganordnung nach Anspruch 1, dadurch gekennzeichnet, daß die rückspringende Halteschulter (16) von der der Dichtkante (8) abgewandten Seite einer umlaufenden Verengung (20) der nutförmigen Ausnehmung (13) gebildet ist.

4. Dichtungsanordnung nach einem der Ansprüche 1 bis 3, dadurch gekennzeichnet, daß die Haltekante (17) des Dichtringes (10) an einer umlaufenden lippenförmigen Verbreiterung (21) des Dichtringes (10) im Haltebereich (12) ausgebildet ist.

5. Dichtungsanordnung nach einem der Ansprüche 1 bis 4, dadurch gekennzeichnet, daß der Dichtring (10) zwischen Dichtbereich (11) und Haltebereich (12) eine das Eindrücken des Haltebereichs (12) samt Haltekante (17) hinter die Halteschulter (16) erleichternde, seitlich umlaufende Einbuchtung (22) aufweist.

## Claims

1. A sealing arrangement for the control piston (1) of a pneumatic valve (2), with a sealing ring (10) made of at least partially elastic material, which comprises an outer, substantially disk-shaped sealing region (11) with a sealing edge (8) resting in the fitted state against the surface region (3) to be sealed, and a retaining region (12) lying concentrically within the sealing region (11), and is arranged with partial prestressing in an associated groove-shaped recess (13) of the control piston (1), characterised in that the groove-shaped recess (13) of the control piston (1), which is integrally formed at least in the region of said recess (13), comprises a retaining shoulder (16) at least on one side, which retaining shoulder (16) is undercut from a region (14) of reduced width lying closer to the sealing edge (8) to a region (15) of greater width lying further removed from the sealing edge (8), and the retaining region (12) of the sealing ring (10) comprises an associated retaining edge (17) running at least partially around the circumference, which retaining edge (17) secures the sealing ring (10) in the groove-shaped recess (13) against the undercut retaining shoulder (16) in the fitted state of the sealing ring effected with elastic expansion of said sealing ring (10).

2. A sealing arrangement according to claim 1, characterised in that the undercut retaining shoulder (16) is formed by the lateral surface of a lateral indentation (18) in the circumferential, groove-shaped recess (13) nearer the sealing edge (8).

3. A sealing arrangement according to claim 1, characterised in that the undercut retaining shoulder (16) is formed by the side of a circumferential constriction (20) of the groove-shaped recess (13) remote from the sealing edge (8).

4. A sealing arrangement according to one of claims 1 to 3, characterised in that the retaining edge (17) of the sealing ring (10) is constructed on a circumferential, lip-shaped enlarged section (21) of the sealing ring (10) in the retaining region (12).

5. A sealing arrangement according to one of claims 1 to 4, characterised in that, between the sealing region (11) and the retaining region (12), the sealing ring (10) comprises a laterally circumferential hollow (22) facilitating the pressing of the retaining region (12) together with the retaining edge (17) behind the retaining shoulder (16).

## Revendications

1. Agencement d'étanchéité pour le piston de commande (1) d'une valve pneumatique (2), comprenant une bague d'étanchéité (10) en matériau au moins partiellement élastique, qui présente une zone d'étanchéité extérieure (11) sensiblement en forme de disque avec une arête d'étanchéité (8) qui repose à l'état monté contre la zone de surface à étancher (3), et une zone de maintien (12) disposée de manière concentrique à l'intérieur de la zone d'étanchéité (11), et qui est agencée sous une précontrainte partielle dans un évidement associé (13) en forme de gorge du piston de commande (1), caractérisé en ce que l'évidement en forme de gorge (13) du piston de commande (1), d'une seule pièce au moins dans la région de cet évidement (13), présente au moins d'un côté un épaulement de maintien (16) en retrait depuis une zone (14) de plus petite largeur disposée plus proche de l'arête d'étanchéité (8) jusqu'à une zone (15) de plus forte largeur disposée plus éloignée de l'arête d'étanchéité (8), et en ce que la zone de maintien (12) de la bague d'étanchéité (10) présente une arête de maintien périphérique associée (17) qui s'étend au moins partiellement sur la périphérie, ladite arête retenant la bague d'étanchéité contre l'épaulement de maintien en retrait (16) dans l'évidement en forme de gorge (13), dans l'état monté de la bague d'étanchéité (10) qui se produit avec élargissement élastique de celle-ci.

2. Agencement d'étanchéité selon la revendication 1, caractérisé en ce que l'épaulement de maintien en retrait (16) est formé par la face latérale, proche de l'arête d'étanchéité (8), d'une entaille latérale (18) dans l'évidement périphérique en forme de gorge (13).

3. Agencement d'étanchéité selon la revendication 1, caractérisé en ce que l'épaulement de maintien en retrait (16) est formé par le côté détourné de l'arête d'étanchéité (8) d'un rétrécissement périphérique (20) de l'évidement en forme de gorge (13).

4. Agencement d'étanchéité selon l'une des revendications 1 à 3, caractérisé en ce que l'arête de maintien (17) de la bague d'étanchéité (10) est réalisée sur un élargissement périphérique (21) en forme de lèvre de la bague d'étanchéité (10) dans la zone de maintien (12).

5. Agencement d'étanchéité selon l'une des revendications 1 à 4, caractérisé en ce que la bague d'étanchéité (10) présente entre la zone d'étanchéité (11) et la zone de maintien (12) un creux périphérique latéral (22) qui facilite l'enfoncement de la zone de maintien (12) conjointement avec l'arête de maintien (17) derrière l'épaulement de maintien (16).
